# EUROPÄISCHE PATENTANMELDUNG

(11) **EP 4 513 068 A1**
(43) Veröffentlichungstag der Anmeldung: **26.02.2025**
(21) Anmeldenummer: 23192328.5
(22) Anmeldetag: 21.08.2023
(51) Int. Cl.: F16K 31/122, F16K 31/143, F15B 15/24, F16K 35/00

(54) **PNEUMATISCHE ANTRIEBSEINHEIT FÜR EIN VENTIL**

(71) Anmelder: SAG Group B.V., 2222 AK Katwijk (NL)
(72) Erfinder: GATTRINGER, Bastian, 5651 Lend (AT); WINKLHOFER, Johannes, 5431 Kuchl (AT)
(74) Vertreter: Weiser & Voith Patentanwälte Partnerschaft

(57) **Zusammenfassung**

Pneumatische Antriebseinheit (1) für ein Ventil, insbesondere Kryoventil, welche einen Zylinder (2) und einen im Zylinder (2) verschieblich gelagerten Kolben (3) mit einer einen ersten Zylinderboden (5) durchsetzenden, mit dem Ventil koppelbaren ersten Kolbenstange (4), eine zweite Kolbenstange (6), die einen dem ersten Zylinderboden (5) gegenüberliegenden zweiten Zylinderboden (7) durchsetzt und mit einem verbreiterten Kopf (11) versehen ist, einen vom zweiten Zylinderboden (7) vorragenden Stutzen (12) mit einem zur zweiten Kolbenstange (6) koaxialen ersten Innengewinde (13), und eine außengewindete Buchse (14) umfasst, die in das erste Innengewinde (13) des Stutzens (12) eingeschraubt ist, wobei die zweite Kolbenstange (6) die Buchse (14) durchsetzt und mit ihrem Kopf (11) die Buchse (14) hintergreift.

## Beschreibung

Die vorliegende Erfindung betrifft eine pneumatische Antriebseinheit für ein Ventil, insbesondere Kryoventil, welche einen Zylinder und einen im Zylinder verschieblich gelagerten Kolben mit einer einen ersten Zylinderboden durchsetzenden, mit dem Ventil koppelbaren ersten Kolbenstange umfasst.

Der Kolben einer solchen Antriebseinheit kann einerseits in nur einer seiner Bewegungsrichtungen mit Druckluft beaufschlagbar sein, sodass das Ventil auch nur in diese Richtung von der Antriebseinheit angetrieben, d.h. je nach Richtung entweder aktiv geschlossen oder aktiv geöffnet, wird. In die jeweils andere Richtung kann das Ventil beispielsweise federbeaufschlagt sein. Andererseits kann der Kolben in beide Bewegungsrichtungen mit Druckluft beaufschlagbar, d.h. doppeltwirkend, sein, sodass das Ventil sowohl in seine Schließ- als auch in seine Öffnungsrichtung aktiv von der Antriebseinheit angetrieben werden kann. In jedem Fall ist die Antriebseinheit wirkungslos, wenn ihre Druckluft- bzw. Energieversorgung unterbrochen ist, sodass die Kolbenstellung und folglich die Ventilstellung nicht mehr beeinflusst werden können. In vielen Anwendungsfällen ist dies unerwünscht oder sogar gefährlich. Beispielsweise soll auch bei Ausfall der Bordnetzversorgung eines Fahrzeugs, das in einem Kryogentank ein unter Tieftemperatur verflüssigtes Gas, z.B. Flüssigwasserstoff (LH₂) oder Flüssigerdgas ("liquefied natural gas", LNG), enthält, der Kryogentank kontrolliert entleert werden können, unter anderem nach einer schweren Beschädigung des Fahrzeugs in einer Werkstatt. Auch soll ein leerer Kryogentank, z.B. bei Auslieferung eines Neufahrzeugs, nicht unkontrolliert geöffnet bleiben, um den Eintrag von unerwünschten gasförmigen, flüssigen oder festen Verunreinigungen zu verhindern.

Die Erfindung setzt sich zum Ziel, eine Antriebseinheit für ein Ventil, insbesondere Kryoventil, zu schaffen, welche einerseits zuverlässig arbeitet und andererseits auch bei Unterbrechung oder Ausfall der Energieversorgung der Antriebseinheit einfach und zuverlässig bedienbar ist.

Dieses Ziel wird mit einer Antriebseinheit der einleitend genannten Art erreicht, die sich erfindungsgemäß durch eine zweite Kolbenstange, die einen dem ersten Zylinderboden gegenüberliegenden zweiten Zylinderboden durchsetzt und mit einem verbreiterten Kopf versehen ist, einen vom zweiten Zylinderboden vorragenden Stutzen mit einem zur zweiten Kolbenstange koaxialen ersten Innengewinde, und eine außengewindete Buchse auszeichnet, die in das erste Innengewinde des Stutzens eingeschraubt ist, wobei die zweite Kolbenstange die Buchse durchsetzt und mit ihrem Kopf die Buchse hintergreift.

Ist die Buchse in einer Betriebsstellung in den Stutzen eingeschraubt, kann der Kolben einer doppeltwirkenden Antriebseinheit ein mit der ersten Kolbenstange gekoppeltes Ventil ungehindert zwischen einer Offenstellung und einer Schließstellung bewegen bzw. der Kolben einer nicht-doppeltwirkenden Antriebseinheit das Ventil in eine Stellung bewegen und gemeinsam mit dem Ventil durch Federkraft aus dieser Stellung bewegt werden, ohne dass der Kopf der zweiten Kolbenstange diese Bewegung durch Anlage an der Buchse behindert. Andererseits kann die Buchse im Stutzen - z.B. einfach von Hand - aus ihrer Betriebsstellung im Inneren des Stutzens so weit herausgeschraubt werden, bis sie am Kopf der zweiten Kolbenstange zur Anlage kommt und über die zweite Kolbenstange den Kolben und über die erste Kolbenstange das Ventil in seine Offenstellung zieht, wodurch das Ventil zwangsgeöffnet wird. In dem Fall, dass das Ventil z.B. das "Shut-Off-Ventil" eines Kryogentanks ist, wird dadurch ein kontrolliertes Entleeren des Tanks auch ohne funktionsfähiges Bordnetz bzw. ohne Energieversorgung der Antriebseinheit ermöglicht.

Damit die zweite Kolbenstange die Buchse durchsetzen und zugleich mit ihrem Kopf hintergreifen kann, könnte die Buchse in Axialrichtung z.B. zweigeteilt sein, sodass sie vor ihrem Einschrauben in das erste Innengewinde des Stutzens zwischen dem Kolben und dem Kopf um die zweite Kolbenstange gelegt und zusammengesetzt wird. Alternativ kann die zweite Kolbenstange an ihrem dem Kolben abgewandten Ende außengewindet und der Kopf z.B. eine Schraubenmutter sein. Eine besonders einfache Ausführungsform und Handhabung ergibt sich, wenn alternativ die zweite Kolbenstange zweigeteilt ist in eine den zweiten Zylinderboden durchsetzende Hülse mit axialer Gewindebohrung und eine in die axiale Gewindebohrung einschraubbare Gewindeschraube mit dem Kopf. Auf diese Weise kann die Gewindeschraube jederzeit eingeschraubt, ausgetauscht oder entfernt werden, um die Buchse zu montieren bzw. zu demontieren.

Günstig ist, wenn die Buchse in axialer Verlängerung ihres Außengewindes einen zum formschlüssigen Angreifen eines Schraubwerkzeugs ausgebildeten Kragen, bevorzugt einen Außensechskant, hat. Dies ermöglicht ein besonders kraftsparendes und präzises - insbesondere manuelles - Verdrehen, d.h. Ein- oder Ausschrauben, der Buchse.

In einer bevorzugten Ausführungsform hat die Buchse zwischen ihrem Außengewinde und ihrem Kragen einen radial abstehenden Kranz und der Stutzen an seiner dem Kolben abgewandten Seite ein zweites Innengewinde mit einem gegenüber dem ersten Innengewinde größeren Durchmesser, wobei die Antriebseinheit ferner einen außengewindeten Sicherungsring umfasst, der mit seiner einen Stirnseite voran in das zweite Innengewinde des Stutzens einschraubbar ist und in einer Sicherungsstellung den Kragen der Buchse übergreift, um mit seiner einen Stirnseite am Kranz der Buchse zur Anlage zu kommen. Der Sicherungsring sichert in der Sicherungsstellung die Buchse gegen ungewolltes Verdrehen im Stutzen. Beispielsweise kann die Buchse dadurch im Normalbetrieb der Antriebseinheit in ihrer Betriebsstellung gegen Ausschrauben und somit gegen ein ungewolltes Zwangsöffnen des Ventils gesichert werden.

In einer besonders vorteilhaften Variante ist der Sicherungsring mit seiner anderen Stirnseite voran in das zweite Innengewinde des Stutzens einschraubbar und kommt in einer Sperrstellung mit seiner anderen Stirnseite am Kopf der zweiten Kolbenstange zur Anlage, um den Kopf gegen die Buchse zu pressen. Dazu ist der Sicherungsring an seiner anderen Stirnseite z.B. verjüngt, sodass mit ein und demselben Sicherungsring durch einfaches Umkehren vor seinem Einschrauben in das zweite Innengewinde des Stutzens entweder in der Sicherungsstellung die Buchse gesichert oder alternativ in der Sperrstellung die Antriebseinheit blockiert werden kann, sodass das Ventil arretiert ist. Ist die Buchse dabei ausreichend tief in den Stutzen eingeschraubt, wird das Ventil über die erste Kolbenstange in seine Schließstellung gedrückt und somit zwangsgeschlossen.

In einer weiteren günstigen Variante hat der Stutzen einen Innenabsatz, an welchem der Kranz der Buchse zur Anlage bringbar ist. Der Innenabsatz bildet einen beim Einschrauben der Buchse deutlich fühlbaren Anschlag, der je nach Ausrichtung des Sicherungsrings entweder die Betriebsstellung der Buchse oder die Schließstellung des Ventils vorgibt.

Für einen modularen Aufbau sind bevorzugt der Stutzen und der Zylinder zweiteilig, wobei der Stutzen an den zweiten Zylinderboden anflanschbar ist. So kann nach Bedarf ein und derselbe Stutzen mit verschiedenen Zylindern oder umgekehrt ein Zylinder mit verschiedenen Stutzen kombiniert werden. Ferner gewährleistet dies die ressourcenschonende Austauschbarkeit der einzelnen Teile.

Besonders günstig ist ferner, wenn der Stutzen eine Abdeckkappe hat, bevorzugt eine versperrbare Abdeckkappe. Auf diese Weise sind der Stutzen, die Buchse und die zweite Kolbenstange sowie, falls vorhanden, der Sicherungsring vor Verschmutzung und bevorzugt auch vor ungewolltem Zugriff gesichert.

Die Erfindung wird nachstehend anhand von in den beigeschlossenen Zeichnungen dargestellten Ausführungsbeispielen näher erläutert. In den Zeichnungen zeigt:
Fig. 1 eine erfindungsgemäße pneumatische Antriebseinheit für ein Ventil in einer perspektivischen Explosionsdarstellung von schräg oben,
Fig. 2 die pneumatische Antriebseinheit von Fig. 1 in einer Betriebsstellung im perspektivischen Längsschnitt;
Fig. 3 eine Variante der pneumatischen Antriebseinheit von Fig. 1 in einer Offenstellung des Ventils im perspektivischen Längsschnitt; und
Fig. 4 die pneumatische Antriebseinheit von Fig. 1 in einer Sperrstellung im perspektivischen Längsschnitt.

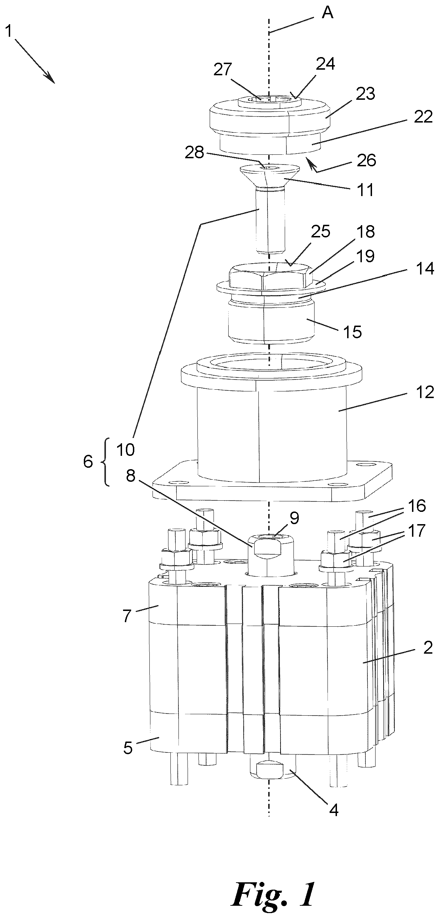

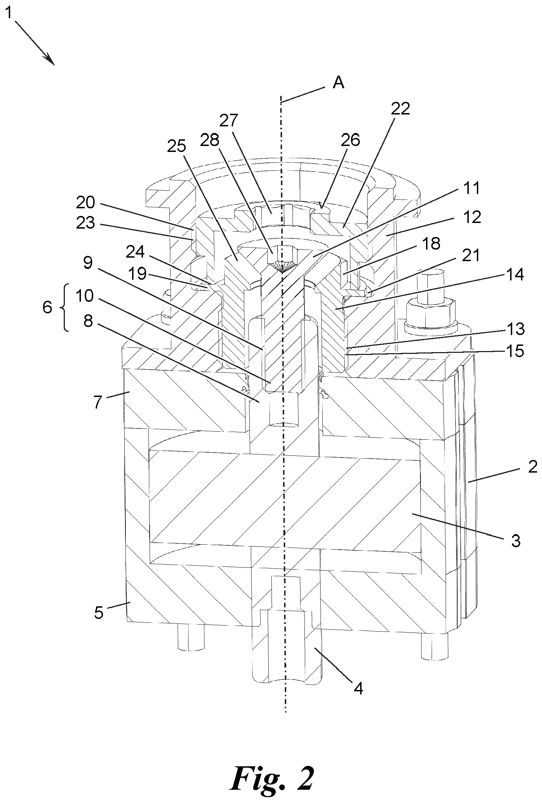

Die Fig. 1 und 2 zeigen eine pneumatische Antriebseinheit 1 für ein Ventil (nicht dargestellt), insbesondere Kryoventil, d.h. ein Ventil für ein unter Tieftemperatur gespeichertes Fluid, z.B. Flüssigwasserstoff (LH₂) oder Flüssigerdgas ("liquefied natural gas", LNG) od.dgl.

Die Antriebseinheit 1 hat einen Zylinder 2 und einen Kolben 3, der im Zylinder 2 entlang einer Achse A verschieblich gelagert ist und eine erste Kolbenstange 4 umfasst. Die erste Kolbenstange 4 ist mit dem Ventil koppelbar, um dieses in zumindest einer Richtung, nämlich in Richtung seiner Offenstellung (hier: nach oben) und/oder in Richtung seiner Schließstellung (hier: nach unten), anzutreiben. Dazu durchsetzt die erste Kolbenstange 4 einen ersten Zylinderboden 5 des Zylinders 2. Die Antriebseinheit 1 hat ferner eine zweite Kolbenstange 6, die einen dem ersten Zylinderboden 5 gegenüberliegenden zweiten Zylinderboden 7 durchsetzt.

Im dargestellten Beispiel ist die zweite Kolbenstange 6 zweigeteilt, u.zw. in eine den zweiten Zylinderboden durchsetzende Hülse 8, die eine axiale Gewindebohrung 9 hat, und eine Gewindeschraube 10, die in die axiale Gewindebohrung 9 eingeschraubt werden kann und einen verbreiterten Kopf 11 hat.

Die Antriebseinheit 1 hat ferner einen vom zweiten Zylinderboden 7 vorragenden Stutzen 12 mit einem ersten Innengewinde 13, das zur zweiten Kolbenstange 6 koaxial ist. Außerdem umfasst die Antriebseinheit 1 eine außengewindete Buchse 14, d.h. eine Buchse 14 mit einem Außengewinde 15. Die Buchse 14 ist in das erste Innengewinde 13 des Stutzens 12 einschraubbar (hier: eingeschraubt). Dabei durchsetzt die zweite Kolbenstange 6 die Buchse 14 und hintergreift die Buchse 14 mit ihrem Kopf 11 (hier: dem Kopf 11 der Gewindeschraube 10).

Im Beispiel der Fig. 1 und 2 sind der Stutzen 12 und der Zylinder 2 zweiteilig, wobei der Stutzen 12 an den zweiten Zylinderboden 7 des Zylinders - z.B. mithilfe von Gewindestiften 16 und Muttern 17 - angeflanscht oder alternativ angeschweißt, angeklebt od.dgl. werden kann. Alternativ ist der Stutzen 12 einstückig am zweiten Zylinderboden 7 ausgeformt.

In der in Fig. 2 dargestellten Betriebsstellung ist die Buchse 14 in das erste Innengewinde 13 des Stutzens 12 vollständig eingeschraubt. In der dargestellten Mittelstellung des Kolbens 3 im Innern des Zylinders 2, welche einer unspezifischen Stellung zwischen Offenstellung und Schließstellung des Ventils entspricht, liegt Kopf 11 der Gewindeschraube 10 nicht an der Buchse 14 an, sondern kann wie der Kolben 3 in beide Axialrichtungen bewegt werden. Z.B. wird der Kolben 3 durch pneumatische Ansteuerung der Antriebseinheit 1, d.h. durch Beaufschlagung mit Druckluft an seiner Unter- oder Oberseite, jeweils nach oben oder nach unten angetrieben, wodurch das mit der ersten Kolbenstange 4 gekoppelte Ventil jeweils geöffnet oder geschlossen wird. Alternativ oder ergänzend kann der Kolben 3 in einer der beiden Axialrichtungen federbeaufschlagt sein: Ist beispielsweise das Ventil das "Shut-Off-Ventil" eines Kryogentanks eines Fahrzeugs, dann ist im Allgemeinen das Ventil selbst in seine Schließstellung (hier: nach unten) federbeaufschlagt und zieht den Kolben, solange er nicht (hier: nach oben) mit Druckluft beaufschlagt ist, axial nach unten.

Zum einfacheren Ein- bzw. Ausschrauben der Buchse 14 in das bzw. aus dem ersten Innengewinde 13 des Stutzens 12 hat die Buchse 14 in axialer Verlängerung ihres Außengewindes 15 optional einen Kragen 18 (hier: einen Außensechskant), welcher zum formschlüssigen Angreifen eines Schraubwerkzeugs (hier: z.B. eines Steckschlüssels) ausgebildet ist. Alternativ kann der Kragen 18 eine andere als Außensechskant-Form haben, z.B. eine Außenvierkant-Form, eine Umfangsriffelung, einen Quer- oder Kreuzschlitz für einen Schraubenzieher etc. oder überhaupt entfallen. Das Ein- und Ausschrauben der Buchse 14 in den bzw. aus dem Stutzen 12 erfolgt insbesondere von Hand.

Optional hat ferner die Buchse 14 zwischen ihrem Außengewinde 15 und ihrem Kragen 18 einen Kranz 19, der radial nach außen absteht. Dabei hat ferner der Stutzen 12 optional an seiner dem Kolben 3 abgewandten Seite ein zweites Innengewinde 20, d.h. das zweite Innengewinde 20 liegt vom Kolben 3 aus gesehen in Axialrichtung hinter dem ersten Innengewinde 13. Gegenüber dem ersten Innengewinde 13 hat das zweite Innengewinde 20 einen größeren Durchmesser. Am Übergang zwischen dem ersten und dem zweiten Innengewinde 13, 20 hat der Stutzen 12 im dargestellten Beispiel optional einen Innenabsatz 21, an welchem der Kranz 19 der Buchse 14 zur Anlage gebracht werden kann bzw. in der Betriebsstellung gemäß Fig. 2 anliegt.

In einer optionalen Ausführungsform hat die Antriebseinheit 1 einen Sicherungsring 22 mit einem Außengewinde 23, der mit seiner einen Stirnseite 24 voran in das zweite Innengewinde 20 des Stutzens 12 einschraubbar (hier: eingeschraubt) ist, bis die eine Stirnseite 24 in einer Sicherungsstellung am Kranz 19 der Buchse 14 anliegt. Dabei übergreift der Sicherungsring 22 den Kragen 18 der Buchse 14. Die Buchse 14 ist auf diese Weise vom Sicherungsring 22 gegen Verdrehen gesichert. Dies kann in jeder Stellung der Buchse 14 im Inneren des Stutzens 12 erreicht werden, insbesondere in der vollständig in den Stutzen 12 eingeschraubten Betriebsstellung der Buchse 14.

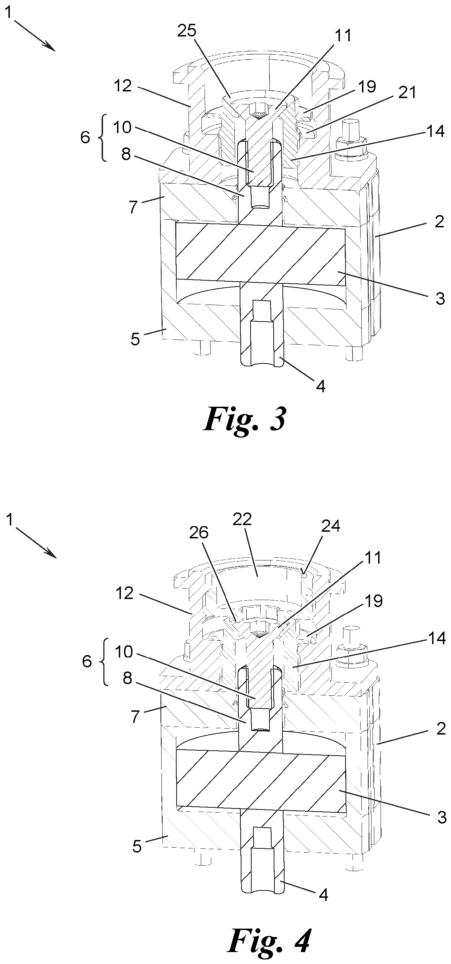

Fig. 3 zeigt (hier: ohne Sicherungsring 22) eine Stellung der Buchse 14, in welcher diese nicht vollständig sondern nur ein Stück weit in den Stutzen 12 eingeschraubt - bzw. gegenüber ihrer vollständig eingeschraubten Betriebsstellung ein Stück weit ausgeschraubt - ist, sodass die Buchse 14 mit ihrer dem Kolben 3 abgewandten Stirnseite 25 am verbreiterten Kopf 11 der zweiten Kolbenstange 6 anliegt. Dadurch wird die Bewegung des Kopfes 11 und folglich der zweiten Kolbenstange 6 und des Kolbens 3 in einer Axialrichtung (hier: nach unten) begrenzt. Im dargestellten Beispiel ist die Buchse 14 soweit eingeschraubt, dass der Kolben 3 gegenüber seiner in Fig. 2 gezeigten Mittelstellung (hier: nach oben) axialverschoben ist. In dieser Stellung ist beispielsweise das Ventil durch die damit gekoppelte erste Kolbenstange 4 in seine Offenstellung gebracht.

Die Berührflächen des Kopfes 11 und der daran angreifenden Stirnseite 25 der Buchse 14 sind in diesem Beispiel in korrespondierender Weise konisch, könnten jedoch alternativ eine andere Form haben, z.B. flach, oder überhaupt voneinander verschieden geformt sein.

Es versteht sich, dass der verbreiterte Kopf 11 der zweiten Kolbenstange 6 allgemein auf verschiedene Weise gebildet sein kann, um die Buchse 14 zu hintergreifen. Beispielsweise kann alternativ zur dargestellten Kombination aus Hülse 8 und Gewindeschraube 10 die zweite Kolbenstange 6 an ihrer dem Kolben 3 abgewandten Seite ein Außengewinde haben und der verbreiterte Kopf 11 durch eine darauf aufschraubbare Mutter gebildet sein. In einer weiteren Alternativvariante könnte die zweite Kolbenstange einen einstückig ausgebildeten verbreiterten Kopf 11 haben und die Buchse 14 axial in z.B. zwei Teile geteilt sein, welche um die zweite Kolbenstange 6 gelegt werden, um Buchse 14 zusammenzusetzen und in das erste Innengewinde 13 des Stutzens 12 einzuschrauben, sodass die zweite Kolbenstange 6 die Buchse 14 durchsetzt und mit ihrem Kopf 11 hintergreift.

Fig. 4 zeigt die Antriebseinheit 1 in einer Sperrstellung des Sicherungsrings 22. Dabei ist der Sicherungsring 22 mit seiner anderen Stirnseite 26 voran in das zweite Innengewinde 20 des Stutzens 12 einschraubbar (hier: eingeschraubt). Die andere Stirnseite 26 des Sicherungsrings 22 ist gegenüber seiner vorgenannten einen Stirnseite 24 verjüngt. Dadurch übergreift der Sicherungsring 22 nicht wie in der Sicherungsstellung (Fig. 2) den Kragen 18 der Buchse 14, um mit seiner einen Stirnseite 24 am Kranz 19 der Buchse 14 anzuliegen, sondern kommt mit seiner anderen Stirnseite 26 am Kopf 11 der zweiten Kolbenstange 6 zur Anlage, um den Kopf 11 gegen die dem Kolben 3 abgewandte Stirnseite 25 der Buchse 14 zu pressen. Ist - wie in Fig. 4 dargestellt - die Buchse 14 dabei vollständig in den Stutzen 12 eingeschraubt, ist in der Sperrstellung der Kolben 3 gegenüber seiner in Fig. 2 gezeigten Mittelstellung (hier: nach unten) axialverschoben und arretiert, wodurch beispielsweise das Ventil über die erste Kolbenstange 4 in seine Schließstellung gebracht ist.

Es versteht sich, dass die Offen- und die Schließstellung des Ventils je nach Ventilweg, Kolbenweg und Kopplung zwischen Ventil und erster Kolbenstange 4 nicht wie in den Fig. 3 und 4 dargestellt annähernd einer oberen und unteren Endlage des Kolbens 3 im Zylinder 2 entsprechen muss, sondern der Kolben 3 in der Schließstellung des Ventils z.B. etwa in seiner Mittelstellung und somit lediglich von seiner Mittelstellung nach oben beweglich oder umgekehrt in der Offenstellung des Ventils etwa in seiner Mittelstellung und somit lediglich seiner Mittelstellung nach unten beweglich sein könnte, oder ähnlich. Sogar bei umgekehrtem Ventilweg kann Antriebseinheit 1 ohne grundlegende Änderung ihrer Bauweise eingesetzt werden.

Damit die Gewindeschraube 10 und der Sicherungsring 22 unabhängig voneinander zugänglich sind, hat der Sicherungsring 22 optional einen Innensechskant, Innensechsrund 27 od.dgl., welcher die eine und/oder andere Stirnseite 24, 26 des Sicherungsrings 22 durchsetzt, und die Gewindeschraube 10 einen kleineren Innensechskant 28, Innensechsrund od.dgl. (Fig. 1).

Optional kann der Stutzen 12 eine Abdeckkappe haben, die in einer Variante an der Antriebseinheit 1, z.B. am Stutzen 12, versperrbar angebracht werden kann (nicht dargestellt).

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

## Patentansprüche

1. Pneumatische Antriebseinheit für ein Ventil, insbesondere Kryoventil, welche einen Zylinder (2) und einen im Zylinder (2) verschieblich gelagerten Kolben (3) mit einer einen ersten Zylinderboden (5) durchsetzenden, mit dem Ventil koppelbaren ersten Kolbenstange (4) umfasst, **gekennzeichnet durch**
eine zweite Kolbenstange (6), die einen dem ersten Zylinderboden (5) gegenüberliegenden zweiten Zylinderboden (7) durchsetzt und mit einem verbreiterten Kopf (11) versehen ist,
einen vom zweiten Zylinderboden (7) vorragenden Stutzen (12) mit einem zur zweiten Kolbenstange (6) koaxialen ersten Innengewinde (13), und
eine außengewindete Buchse (14), die in das erste Innengewinde (13) des Stutzens (12) eingeschraubt ist, wobei die zweite Kolbenstange (6) die Buchse (14) durchsetzt und mit ihrem Kopf (11) die Buchse (14) hintergreift.

2. Antriebseinheit nach Anspruch 1, **dadurch gekennzeichnet, dass** die zweite Kolbenstange (6) zweigeteilt ist in eine den zweiten Zylinderboden (7) durchsetzende Hülse (8) mit axialer Gewindebohrung (9) und eine in die axiale Gewindebohrung (9) einschraubbare Gewindeschraube (10) mit dem Kopf (11).

3. Antriebseinheit nach Anspruch 1 oder 2, **dadurch gekennzeichnet, dass** die Buchse (14) in axialer Verlängerung ihres Außengewindes (15) einen zum formschlüssigen Angreifen eines Schraubwerkzeugs ausgebildeten Kragen (18), bevorzugt einen Außensechskant, hat.

4. Antriebseinheit nach Anspruch 3, **dadurch gekennzeichnet, dass** die Buchse (14) zwischen ihrem Außengewinde (15) und ihrem Kragen (18) einen radial abstehenden Kranz (19) und der Stutzen (12) an seiner dem Kolben (3) abgewandten Seite ein zweites Innengewinde (20) mit einem gegenüber dem ersten Innengewinde (13) größeren Durchmesser hat, wobei die Antriebseinheit (1) ferner einen außengewindeten Sicherungsring (22) umfasst, der mit seiner einen Stirnseite (24) voran in das zweite Innengewinde (20) des Stutzens (12) einschraubbar ist und in einer Sicherungsstellung den Kragen (18) der Buchse (14) übergreift, um mit seiner einen Stirnseite (24) am Kranz (19) der Buchse (14) zur Anlage zu kommen.

5. Antriebseinheit nach Anspruch 4, **dadurch gekennzeichnet, dass** der Sicherungsring (22) mit seiner anderen Stirnseite (26) voran in das zweite Innengewinde (20) des Stutzens (12) einschraubbar ist und in einer Sperrstellung mit seiner anderen Stirnseite (26) am Kopf (11) der zweiten Kolbenstange (6) zur Anlage kommt, um den Kopf (11) gegen die Buchse (14) zu pressen.

6. Antriebseinheit nach Anspruch 4 oder 5, **dadurch gekennzeichnet, dass** der Stutzen (12) einen Innenabsatz (21) hat, an welchem der Kranz (19) der Buchse (14) zur Anlage bringbar ist.

7. Antriebseinheit nach einem der Ansprüche 1 bis 6, **dadurch gekennzeichnet, dass** der Stutzen (12) und der Zylinder (2) zweiteilig sind, wobei der Stutzen (12) an den zweiten Zylinderboden (7) anflanschbar ist.

8. Antriebseinheit nach einem der Ansprüche 1 bis 7, **gekennzeichnet durch** eine bevorzugt versperrbare Abdeckkappe für den Stutzen (12).
